(19) Europäisches Patentamt
European Patent Office
Office européen des brevets

(11) EP 4 386 879 B1

(12) EUROPEAN PATENT SPECIFICATION

(45) Date of publication and mention of the grant of the patent:
**07.05.2025 Bulletin 2025/19**

(21) Application number: **22213375.3**

(22) Date of filing: **14.12.2022**

(51) International Patent Classification (IPC):
***H01M 4/04*** *(2006.01)* ***H01M 4/66*** *(2006.01)*
***H01M 4/70*** *(2006.01)* ***H01M 4/72*** *(2006.01)*
***H01M 10/30*** *(2006.01)*

(52) Cooperative Patent Classification (CPC):
**H01M 4/04; H01M 4/661; H01M 4/70; H01M 4/72; H01M 10/30**

(54) **ZINC ELECTRODE**

ZINKELEKTRODE

ELECTRODE EN ZINC

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**19.06.2024 Bulletin 2024/25**

(73) Proprietor: **ZN2H2 Inc.**
**King of Prussia PA 19406 (US)**

(72) Inventors:
- **ROSENFELD, Oren**
  **Raanana (IL)**
- **MARKHEIM, Chaim**
  **Ramat-Gan (IL)**
- **SCHAMEL, Andreas**
  **50374 Erfstadt (DE)**

(74) Representative: **Schaafhausen, Anne**
**Schaafhausen Patentanwälte PartGmbB**
**Prinzregentenplatz 15**
**81675 München (DE)**

(56) References cited:

- **"Characterization of Materials, Second Edition", 12 October 2012, WILEY, article ESPINAL LAURA: "POROSITY AND ITS MEASUREMENT", pages: 1 - 9, XP055832126**
- **KALMAN ZWI H. ET AL: "Density Determination of Thin Coatings by X-ray Methods", JOURNAL OF THE AMERICAN CERAMIC SOCIETY, vol. 72, no. 7, 1 July 1989 (1989-07-01), US, pages 1170 - 1174, XP093044603, ISSN: 0002-7820, DOI: 10.1111/j.1151-2916.1989.tb09703.x**
- **N.N.: "Understanding Coating Weight Designations for Zinc-Based Coatings on Steel Sheet", 1 March 2009 (2009-03-01), XP093044643, Retrieved from the Internet <URL:URL: https://www.galvinfo.com/wp-content/uploads/sites/8/2017/05/GalvInfoNote_1_1.pdf> [retrieved on 20230505]**
- **WANG ET AL: "Effects of Deposition Conditions on the Morphology of Zinc Deposits from Alkaline Zincate Solutions", J. ELECTROCHEM. SOC, 1 January 2006 (2006-01-01), pages 405, XP093044550, Retrieved from the Internet <URL:https://iopscience.iop.org/article/10.1149/1.2186037/pdf> [retrieved on 20230504]**
- **MCBREEN JAMES: "ZINC ELECTRODE IN ALKALINE ELECTROLYTE", 1 January 1996 (1996-01-01), NY 11973, XP093044743, Retrieved from the Internet <URL:https://www.osti.gov/servlets/purl/206614> [retrieved on 20230505]**
- **CHLADIL LADISLAV ET AL: "Pulse Deposition of Zinc in Alkaline Electrolytes for Ni-Zn Secondary Batteries", ECS TRANSACTIONS, vol. 63, no. 1, 17 November 2014 (2014-11-17), US, pages 217 - 223, XP093044724, ISSN: 1938-5862, DOI: 10.1149/06301.0217ecst**
- **ZELGER CHRISTIAN ET AL: "Rota-Hull Cell Study on Pulse Current Zinc Electrodeposition from Alkaline Electrolytes", ELECTROCHIMICA ACTA, ELSEVIER, AMSTERDAM, NL, vol. 213, 21 July 2016 (2016-07-21), pages 208 - 216, XP029698451, ISSN: 0013-4686, DOI: 10.1016/J.ELECTACTA.2016.07.108**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 386 879 B1

## Description

The present invention relates to a zinc electrode on which a solid metallic zinc layer is electrodeposited, an electrochemical cell and a method for zinc electrodeposition in the electrochemical cell.

Zinc (Zn) electrodes or the electrodeposition of zinc on a collector material is important for many aspects, for example electrowinning, electrogalvanizing, zinc rechargeable batteries and many more.

Zinc is one of the most used negative electrode material of batteries due to its high-capacity density of 820 Ah/kg (equal approx. 5820 Ah/l). Except for the zinc-carbon primary battery, in which zinc anode is in solid form, the zinc electrode in all battery systems is powdery to achieve high zinc electrolyte interface and good availability of electrolyte near the surface. Such electrodes have space for storing dissolution products and allow a high reaction rate due to high surface area on both weight and volume basis.

In zinc electrodes of different battery systems, a porosity of 60 - 80% of zinc deposits is most commonly found. This is equivalent to a capacity of 1.2 Ah/$cm^3$ (equals ~ 1.46 g/$cm^3$) to 2.2 Ah/$cm^3$ (equals ~ 2.7 g/$cm^3$) for the zinc active material in such applications.

However, high energy density alkaline primary batteries use higher density of the Zn electrode of 3 - 3,5 g/$cm^3$, that corresponds to approx. 42 - 50% zinc volume or approx. 50 - 58% porosity of these zinc deposits.

The standard potential of the zinc electrode is shown in equation [I].

$$Zn \rightleftarrows Zn^{2+} + 2e^- \quad E^0 = -0.763\ V \qquad [I]$$

The oxidation of zinc electrode during discharge may involve several basic steps, which include oxidation of zinc atoms on the surface (i.e. the breaking up of the metallic bonding), solvation in the solution, diffusion in the electrolyte, and precipitation of the solid phase of zinc oxide (ZnO) when the solubility limit is reached. The reverse is involved in the deposition process during (re)charging of the electrode.

A number of zinc complexes may form but the predominant species in high molar potassium hydroxide (KOH) has been identified as the tetrahedral $Zn(OH)_4^{2-}$ - complex. The electrode also has a rather high exchange current density, on the order of 0.1 - 0.25 A/$cm^2$.

The dissolution process at a zinc electrode in alkaline solutions can be expressed in equation [II].

$$Zn + 4OH^- = Zn(OH)_4^{2-} + 2e^- \qquad [II]$$

When the solution near the surface becomes saturated with the dissolved zinc species, precipitation of zinc oxide may occur according to the following reaction [III].

$$Zn(OH)_4^{2-} = ZnO + 2OH^- + H_2O \qquad [III]$$

Thus, the overall reaction from zinc metal is depicted in equation [IV].

$$Zn + 2OH^- = ZnO + H_2O + 2e^- \qquad [IV]$$

However, the morphology of the zinc deposits and their control play a crucial role in the quality and performance of the final zinc-deposited electrodes and in the use of such electrodes in various applications.

So far, zinc electrodes are mostly used for primary, not rechargeable batteries like alkaline or Zn-air batteries. Rechargeable systems that use a negative zinc electrode had been investigated and developed for a variety of applications like Zn-Ag batteries, Zn-$MnO_2$ rechargeable alkaline batteries, Zn-NiOOH rechargeable nickel zinc batteries, Zn-$O_2$ rechargeable zinc air batteries, Zn-$H_2$ hydrogen generation cells or electrolyzers that produce sequentially hydrogen and oxygen and store the energy in between by the deposition of zinc.

However, zinc batteries use high surface area zinc electrodes (anodes) to reduce over-potential. The high surface area is achieved by using small particle powder zinc paste also named powdery zinc. Zinc electrodes for the use in rechargeable batteries must possess some kind of grid, lattice-like structure to fix the Zn-ions to their place. This fixation is primarily ensured by additives and binders. The advantage of powdery zinc is in its slightly lower over-potential while discharging. Normally, zinc in the form of powder, granular compositions or fibers are used in gel form with binder and additives as negative electrode in zinc batteries, whereby the typical zinc particle sizes are in the range between 20 and 50 µm.

The main problem associated with zinc-based rechargeable batteries is the limited cycle-life principally due to the

zinc electrode's morphology of which tends to change on electrodeposition of the zinc during charge or the whole cycling. The change of morphology that causes an electrode to decline in performance or fail can be in several modes: shape change, deposition of mossy zinc, densification, and dendrite formation. Shape change is a phenomenon involved with alteration of the zinc electrode geometric area, where zinc active material leaves one location and agglomerates in other locations. In such batteries not all zinc ions are actually fixed to their place, flow around in the electrolyte and will be deposited back as metallic zinc in a different location. Densification is the phenomenon wherein the electrode loses porosity and active surface area and thereby suffers a reduction in its kinetic capability and passivates easily. Densification is often observed together with shape change. Dendrite formation occurs during the charging period and may result in penetration through a separator of an electrochemical cell causing shorting and instant cell failure.

The interest in developing rechargeable zinc batteries or zinc air batteries as a high-energy power source has stimulated sustained research on deposition from alkaline zincate solutions. The cycle life of such rechargeable zinc or zinc-air batteries has been found to be limited mainly because the zinc electrode is the life-limiting factor due to its tendency to passivation and solubility in a concentrated alkaline solution. Further, morphological changes during charging or discharging of the zinc electrode can occur like dendritic formation or loss of porosity. Another point to consider is the potential for mossy and heavy sponge formations, which can cause zinc particles to detach from the electrode and cause short circuits in a cell.

Morphological zinc deposits that can occur during the electrodeposition of zinc to produce a zinc-deposited electrode comprise various types. Usually, five main morphology types are described in the state of the art. These types are heavy spongy, dendritic, boulder, layerlike and mossy. It is generally assumed that the growth of dendrites is under diffusion control, whereas that of mossy is under activation control. Kinetically, there are preferred crystal directions and planes for dendrite growth. The two morphology types, mossy and dendrite, must be prevented in battery applications. Mossy deposits may lead to loss of active material or short circuit at the electrode edges. It can also result in shape change. Mossy zinc is preferably deposited at low current density, high zincate concentration and high temperature. Conditions that favor the formation of dendrites are high current density, low zincate concentration and low temperature. It also had been shown that molecular hydrogen ($H_2$) generation can lead to morphology shape change in favor of dendritic, mossy or heavy spongy morphologies. Further, $H_2$ evolution leads to electrolyte dry out and pressure buildup in an electrochemical cell. $H_2$ generation is the result of too high current densities and therefore overvoltage during the charging.

The causes why and under which conditions one or the other morphological feature occurs are subject of current research and not yet fully elucidated. How such structures can be almost completely prevented during the production of a zinc-loaded electrode is not yet understood. Structures such as those described as boulder or layerlike can only be produced under very specific conditions and starting materials. For example, in the prior art, such structures could only be produced by electrodeposition of zinc on a zinc substrate. However, this makes such products unusable for applications in a galvanic cell or even a battery.

Wang et al. describe morphological variations of zinc deposits form alkaline solutions and characterize and categorize the morphological features of zinc deposits (R. Y. Wang et al. "Effects of Deposition Conditions on the Morphology of Zinc Deposits from Alkaline Zincate Solutions", J. Electrochem. Soc, 2006, page 405).

Chladil et al. describe the influence of charging/ depositions mode on the resulting morphology of zinc deposit over the wide range of deposition frequencies, wherein all depositions were performed in the mostly use 6 M KOH saturated by zinc oxide. The deposited layers were evaluated from their morphology point of view and the electrochemical behavior of deposit in relation to their dissolution reaction was investigated by linear polarization and electrochemical impedance spectroscopy (EIS) methods (Chladil Ladislav et al.: "Pulse Deposition of Zinc in Alkaline Electrolytes for Ni¬¬-Zn Secondary Batteries", ECT Transactions, vol. 63, no. 1, 17.11.2014, pp 217-223).

Zelger et al. describe the effect of pulse interrupt current on the morphology of electrodeposited zinc in non-stagnant alkaline electrolytes with the Rota-Hull cell. According to said paper the pulse interrupt current Rota-Hull cell experiments produce compact zinc deposits at all electrolyte flow velocities an zincate concentration (Zelger Christian et al.: " Rota-Hull Cell Study on Pulse Current Zinc Electrodeposition from Alkaline Electrolytes", Electrochimica Acta, Elsevier, Amsterdam, NL, vol. 213, 21.07.2016, pp 208-2016).

However, the prior art methods cannot produce a uniform zinc layer over a longer deposition time, not to mention a zinc layer of greater mass. In the methods known from the prior art, a morphology change of the zinc layer always occurs with longer electrodeposition. During electrodeposition according to the state of the art, the zinc layer undergoes morphology changes from a rather compact and adherent layer to a mossy- or heavy spongy, non-compact, highly porous or filamentous layer, which is no longer adherent and thus, can lead to short circuits or other effects like overheating. In other cases, a formation of a dendritic layer leads to the stop or interruption of the electrodeposition process. Dendrites will also result in short circuit. In addition, passivation, which may have occurred during a previous discharge, leads to the formation of mossy or filamentous deposits during a new deposition process. Such filamentous deposits have a low density and do not adhere to the electrode, which leads to short circuits.

Furthermore, rechargeable batteries or electrochemical storage with a zinc minus pole can be constructed in the charged state with a metallic zinc electrode or in the discharged state with ZnO layer on the current collector or zincate in

the electrolyte. Primary batteries - of course - are fabricated in the charged state with zinc powder. Rechargeable NiZn batteries are in most cases assembled in the discharged state but also in the charged state - for example with a 3D porous zinc electrode.

State of the art zinc electrodes differ from their structure and the amount of zinc. For rechargeable systems the capacity density is related to the depth of discharge (DOD) or the state of charge (SOC) that can be used during cycling. That means, not all of the zinc is utilized for energy storage. In primary systems, approximately 95% of the zinc is used for discharge. But, state of the art rechargeable systems would only survive a couple of cycles, approximately 10 cycles, with DOD/SOC in the range of 90%. The best reported results show 100 - 200 cycles with DOD 40% and several thousand cycles at DOD < 1%.

In most cases of Zn-air and NiZn rechargeable batteries, the zinc electrode, not the counter electrode, is the life (cycle number) limiting component. The reason for not full cycling of the zinc is that the zinc electrode loses its structure and electrical interconnections between the active material parts. In most systems, the zinc electrode has two to three times higher capacity than the counter electrode. It should be noted that due to the high capacity of the zinc metal, even 30 - 40% zinc utilization for cycling results in competitive battery systems.

Therefore, the present invention is based on the object to provide an electrodeposited zinc electrode which overcomes the disadvantages in the state of the art. In particular, the present invention provides a zinc electrode which is capable of performing nearly 100% zinc utilization while providing almost infinity cycles when used in an application.

This object is solved by a zinc electrode having the features according to claim 1, an electrochemical cell having the features of claim 13 and a method having the features of claim 22. Preferred embodiments of the invention are defined in the respective dependent claims.

According to the invention, a zinc electrode is provided, wherein the zinc electrode is obtainable by a method according to this invention, comprises a current collector material on which a zinc layer is electrodeposited, wherein the zinc layer appears as compact solid metal, comprises a boulder-like and/or layerlike microstructure, and is adherent with a compact porosity. In the sense of the invention compact means densely packed, without large gaps.

According to yet another preferred embodiment, the zinc layer is partially or completely removed from the current collector material during a discharge cycle resulting in a bare current collector material in case of a complete removal.

In the sense of the invention completely means that approximately 100% of the zinc layer can be removed. In other words, it is possible to dissolve the zinc layer partially (SOC > 0) or completely (SOC = 0) from the current collector material by a discharge process, so that a bare current collector material is available for a further electrodeposition in case of a complete dissolution of the Zn layer. However, the discharge can also dissolve the Zn layer only partially and the Zn layer can then be electrodeposited again. In principle, this formation/electrodepositing and dissolution of the Zn layer can be repeated almost infinitely. In the sense of the invention a bare current collector material means a current collector material in its originally used initial state i.e., without or almost without any residues on it.

According to yet another preferred embodiment, the zinc layer is electrodeposited on a bare current collector material or on a current collector material on which a zinc layer is already electrodeposited. This means the electrodeposition of the electrode according to the invention can start or take place at SOC $\geq$ 0.

According to yet another preferred embodiment, the zinc layer comprises a density of 3,50 to 7,14 g/cm$^3$. A density in the range of 4,50 to 7,14 g/cm$^3$ is preferred, and a density in the range of 5,00 to 7,00 g/cm$^3$ is particularly preferred. In the ideal case, the density is near 7,14 g/cm$^3$. These densities are almost identical to the real densities of metallic zinc. This shows that the zinc deposit according to the invention is almost identical to that of the real density of metallic zinc. Mossy or dendritic zinc deposits do not achieve such densities. In a few experiments, zinc deposits with a higher density could be produced from the state of the art, but they had a very low thickness and were partly subject to morphological changes. Furthermore, in these tests, zinc deposits were only deposited on a toughened zinc substrate as a collector material, which does not make sense for a commercial application. A certain low porosity that results in a density less than 3,5 g/cm$^3$ or lower can be achieved at certain deposition conditions. That may be favorable to achieve a higher surface area and thus lower overpotential.

The zinc electrode maintains the high-capacity density of the zinc. The deposited density of 3,50 - 7,14 g/cm$^3$ according to the invention corresponds to a capacity density of 2.87 Ah/cm$^3$ - 5.85 Ah/cm$^3$ respectively. Such a zinc electrode according to the invention, when used in a battery or other application, can provide almost infinite charge/-discharge cycles of the battery or other application. The zinc deposition according to the invention results in a compact, interconnected metal morphology. There is a direct electrical connection of all parts of the zinc deposit to the current collector material. Thus, there are no oxide barriers as with powder/particle zinc electrode applications. A feature of the invention is that with such a zinc electrode, when used in a cell system or application such as a battery, such a system or application starts in a discharged state SOC = 0. By using the zinc electrode according to the invention, much higher energy density can be achieved in applications due to the use of a high SOC (up to about 80 - 100% of the ZnO/zincate of the system/application can be used for charging and 100% DOD can be used for discharging). It is one of the features of the invention that large numbers of cycles (virtually infinite cycles) can be achieved by introducing 100% DOD steps during the cycling process when the zinc electrode is used, for example, in a battery. Zinc volume changes and/or partial

mossy/dendritic deposits can be completely removed and the system, more precisely the zinc electrode can start again with a homogeneous and smooth zinc deposition. The capacity and capacity density values described in the present invention therefore relate to 100% DOD - the full utilization of the deposited zinc for energy storage and therefore high capacity density.

According to a preferred embodiment, neither the current collector material nor the zinc layer comprises a binder, a grid, a foam, a fabric structure, or an additive to couple the zinc layer to the current collector material. Unlike in the prior art, the electrode according to the invention does not require any grid, foam or fabric structures or binders, as is the case with rechargeable Zn-air or primary batteries hence the electrode according to the invention has much higher energy density compared to the prior art. Further, the inventive electrode is not comprising additives such as calcium hydroxide that is usually present for immobilization of zincate.

According to another preferred embodiment, the zinc layer is made from non-powder zinc. Compared to powdered zinc electrodes and their applications, however, the active surface of the electrode according to the invention is smaller and thus the overvoltage is greater. In the solid non-powdery zinc deposition according to the invention, there will always be electrical connection of the zinc with the current collector material, whereas in powdery deposition the passivated particle will lose its electric connection with the current collector, hence causing lower utilization of active material. Here, it is important to understand that in the electrode according to the invention, during charging or electrodeposition pure solid metal zinc is plated, powdery deposits are not produced nor are they already present. Powdery zinc is also understood to be a deposit of mossy zinc, which has the same negative properties as powdery zinc when it is detached from the substrate. However, such a powdery deposition is not desired in the electrode according to the invention, quite the contrary, because the zinc deposition according to the invention leads to a compact, interconnected metal morphology. Although the surface area may be smaller compared to powder zinc, the discharge current may not be smaller to such an extend because particles can be covered with an oxide layer and electrical conduction through the oxides of the particles is lower compared to electrical conduction in the solid zinc layer described here.

One of the advantages of solid zinc, non-powdery deposition is high zinc utilization on discharge and the ability to deposit thick smooth layer of zinc of hundreds of mg/cm$^2$ and more. Further, virtually unlimited number of charge/discharge cycles without any permanent electrode shape change could be realized with such an electrode.

According to still another preferred embodiment, the current collector material is selected from the group comprising one or more of steel, low carbon steel, nickel, nickel plated steel, nickel plated low carbon steel, or nickel-phosphorus (NiP) covered steel. It was found that low carbon steel is a preferred material as for its very low price, not corroding in an alkaline environment and no $H_2$ is being evolved on its surface. The electrode may also comprise at least one of polymer substrates with nickel (Ni) or NiP surface coatings or composite materials. Or the electrode may comprise a structure made from carbon fibers or fibers with electrically conducting surface coatings. Optional additives to reduce self-discharge can be further applied to either the electrolyte or deposited on the current collector material. In that case, the surface of the electrode is increased, but a compact, high density, high conductivity zinc layer is deposited on such high surface area substrate.

Further, according to a preferred embodiment, the current collector material is cold formed , preferably cold rolled.

Further, according to another preferred embodiment, the current collector material is cold rolled steel, in particular cold rolled low carbon steel. Surprisingly, it has been found that cold-formed materials, in particular cold-formed or cold-rolled steel or low carbon steel, are particularly well suited as collector materials for producing the electrode according to the invention. It was found that cold rolled low carbon steel is a preferred material as for its very low price, not corroding in an alkaline environment, and no $H_2$ is being evolved on its surface at electrodeposition. It may be that these materials have a similar crystalline or microscopic surface to pure zinc, thus supporting the formation of a solid zinc layer. In this respect, it is surprising that the deposition of zinc on such a collector can be achieved without any additives and/or binders. Of course, additional additives or binders could be used, but it has been shown that these are not essential for the formation of the electrode according to the invention.

According to yet another preferred embodiment, the zinc layer is free of copper (Cu). It has been shown to be beneficial if no ions such as $Cu^+$ are present during the deposition of the zinc. Such ions will promote $H_2$ evolution on charging, thereby causing mossy zinc deposition. If the presence of copper during deposition is avoided as far as possible, the zinc electrode plated with zinc is practically free of copper. However, it is also possible to use copper as a collector material. In this case, however, care must be taken to prevent the dissociation of $Cu^+$-ions during deposition in order to suppress $H_2$ evolution during deposition. Thus, a copper collector may be covered with a Ni, NiP, or other iron (Fe-) alloy coating.

According to yet another preferred embodiment, the zinc layer has a mass of 200 mg/cm$^2$, preferably of 300 mg/cm$^2$, and most preferably of 400 mg/cm$^2$. The zinc electrode according to the invention can have a zinc deposit of a mass of a few micrograms to several hundred or thousands of milligrams per square centimeter (mg/cm$^2$). In principle, the mass of such a zinc layer according to the invention is almost infinite, but it is obvious that there are certain limits in the realization of such a layer. Until now, such layer masses of solid metallic zinc could not be produced within the state of the

art. The zinc electrode according to the invention is therefore unique in terms of its compactness, morphology, and three-dimensionality. However, as said, it is also possible to achieve even higher layer masses, e.g., by continuously applying new zinc-comprising electrolyte during the electrodeposition in an application. With such an application even thousands of $mg/cm^2$ can be realized. In terms of capacitance per $cm^2$, such zinc layers of 200 to 400 $mg/cm^2$ according to the invention correspond to a capacity density of 164 to 328 $mAh/cm^2$. As mentioned, however, layer masses of more than a thousand $mg/cm^2$ can also be achieved, thereby allowing even higher capacitance densities to be obtained. It is also clear that the zinc layer mass to be achieved will be different for various applications and application types. For example, a battery application requires a less massive layer than a $H_2$ generator application.

According to yet another preferred embodiment, the zinc layer has a mass of 0 - 10000 $mg/cm^2$; preferably of 1 - 5000 $mg/cm^2$; and more preferably of 25 - 2000 $mg/cm^2$.

According to yet another preferred embodiment, the zinc layer has a mass of up to 10000 $mg/cm^2$; preferably of up to 5000 $mg/cm^2$; and more preferably of up to 2000 $mg/cm^2$.

According to yet another preferred embodiment the mass in $mg/cm^2$ of the zinc layer (300) is almost unlimited.

According to yet another preferred embodiment, the zinc layer has a mass of at least 25 $mg/cm^2$.

According to yet another preferred embodiment, the zinc layer has a porosity of less than 50%. The electrode according to the invention is very compact with a density range of the zinc deposit like that of the real density of metallic zinc, thus the zinc deposit also has a lower porosity of less than 50%. However, the porosity can be set even lower at up to 40%. A porosity of less than 30% is preferred, and less than 20% is particularly preferred. Conventional zinc electrodes do not achieve such low porosity values, not to speak of electrodes used in zinc-air batteries. Compared to common electrode surfaces, the specific active surface of the zinc electrode according to the invention is several 100 to 1000 orders of magnitude lower than the specific active surface in zinc-air battery applications due to the lower porosity. For example, the surface area of the zinc powder (e.g. in zinc-air batteries) according to the state of the art is about 1 $m^2/g$. According to the invention, layers of a few micrograms to several thousands of milligrams per $cm^2$ can be achieved. With a layer mass according to the invention of, for example, 200 $mg/cm^2$, this would result in a surface area for the zinc powder case of approx. 2000 $cm^2$, which is a factor of 2000. Thus, even if a certain porosity is still present in the layer according to the invention, the active surface area is several orders of magnitude lower than that of a conventional electrode layer of the state of the art.

According to the invention an electrochemical cell is provided which comprises the zinc electrode according to one of the aforementioned zinc electrode embodiments for zinc electrodeposition, wherein the electrochemical cell further comprises a zinc-comprising electrolyte and a cathode.

In the sense of the invention, the current collector material of the zinc-electrode is also named negative electrode, anode, anode current collector material, or anode collector material. In the sense of the invention, the cathode is also named positive electrode, counter electrode, counter current collector material, cathode current collector, or cathode collector material.

To create a zinc loaded electrode with the electrochemical cell, the cell can be assembled in a discharged state (SOC = 0) with only an anode current collector material as the negative side and a cathode current collector as the positive side, and both sides (negative, positive) are connected through an electrolyte which comprises zinc mainly in form of ZnO and/or zincate but not powdery zinc. However, in the sense of the invention, an electrochemical cell comprises an anode collector material, a cathode collector material and a suitable electrolyte. For the sake of the invention, electrochemical cell is defined as a generic term for various arrangements, either used in electrochemistry or based on electrochemical processes. In this context, electrochemical cell includes galvanic cell, electrolytic cell as well as accumulator cell. The electrolyte may be liquid or solid, or both liquid and solid electrolyte may be present. An electrochemical cell can thus be defined as an arrangement of two electrodes conductively connected via a zinc-comprising electrolyte.

According to a preferred embodiment of the electrochemical cell, the zinc-comprising electrolyte is alkaline. Although it is also feasible that the zinc-comprising electrolyte may mainly comprise zinc chloride or ammonium chloride, an alkaline environment is still preferred.

According to a preferred embodiment of the electrochemical cell, the zinc layer, the zinc-comprising electrolyte, the current collector material and/or the cathode is free of copper, copper ions and/or copper oxides.

According to another preferred embodiment of the electrochemical cell, the zinc-comprising electrolyte comprises a zinc-source which is selected from the group comprising one or more of $Zn^{2+}$-ions, ZnO, zincate and/or a zinc-complex. When the present invention refers to a zinc-comprising source or zinc-comprising electrolyte, it primarily means one of the above-mentioned substances, with ZnO and zincate being preferred. For the purposes of the invention, zinc complexes are understood to be any kind of zincate complexes, but also those complexes which contain zinc and can dissociate during (re)charging so that solid Zn can be further deposited on the collector material or on the collector already plated with a zinc layer. The zinc source can have different viscosities and can be used as paste or slurry or as solution. It is also possible to use several of the zinc sources together. However, it should be expressly mentioned that in the sense of the invention, a zinc-comprising source or a zinc-comprising electrolyte does not comprise zinc in the form of powdery zinc. Rather, the use or application of powdery zinc in form of solid zinc powder is not suitable for the invention.

According to yet another preferred embodiment of the electrochemical cell, the zinc-source or at least one component of the zinc-source is supersaturated after the cell is discharged. This means that during the discharge of the cell, the components of the zinc source do not convert exactly stoichiometrically back into the components actually used at the beginning, but at least one component is not or cannot be converted any further, so that this component is present in a super-saturated concentration. For example, ZnO can be used which is transferred via zincate to zinc which is then plated during the electrodeposition. In the reverse reaction, i.e. the discharge process, zinc is transferred to zincate, but not all zincate above the saturation point is transferred back to ZnO, so that zincate is now supersaturated.

According to yet another preferred embodiment of the electrochemical cell, the alkaline zinc-comprising electrolyte comprises KOH. In this context, the electrolyte may further contain KOH with a minimum amount of 5 - 25 wt% and a maximum amount of 35 - 60 wt%, with an amount of 26 wt% to 36 wt% KOH being preferred and 30 wt% KOH being preferentially preferred.

According to yet another preferred embodiment, the zinc-comprising electrolyte further comprises NaOH with a minimum range of 5 - 15 wt% and a maximum range of 16 - 30 wt%, with 20 wt% NaOH being preferred and with 18 wt% NaOH being preferentially preferred. NaOH can be used in place of KOH or in combination as well.

According to still another preferred embodiment of the electrochemical cell, the zinc-comprising electrolyte, when it is applied to a new electrochemical cell, has a minimal ZnO/KOH-ratio of 190,00 g ZnO in 1 L KOH, wherein a minimal ZnO/KOH-ratio of 100,00 g ZnO in 1 L KOH being preferred, and a minimal ZnO/KOH-ratio of 8,00 g ZnO in 1 L KOH being preferentially preferred and/or wherein the zinc-comprising electrolyte has a maximal ZnO/KOH-ratio of 2380,00 g ZnO in 1 L KOH, wherein a maximal ZnO/KOH-ratio of 2670,00 g ZnO in 1 L KOH being preferred, and a maximal ZnO/KOH-ratio of 2980,00 g ZnO in 1 L KOH being preferentially preferred. At the end of the charge the concentration can be much lower, hence the minimal zincate or dissolved ZnO (as ZnO will not stay as ZnO anyway since it is below saturation point) is approximately at 0,1 M per 1 L KOH or 8 g ZnO per 1 L KOH. For the purposes of the invention, "applied to a new electrochemical cell" means that the cell is being loaded for the first time or with fully fresh electrolyte. The applied ratio is therefore the ratio which exists before a deposition process or charge cycle starts. It is understood that these parameters change during a charge or discharge cycle.

According to still another preferred embodiment of the electrochemical cell, the zinc-comprising electrolyte comprises a minimal ZnO concentration of 0,01 M per 1 L KOH in $H_2O$ electrolyte, wherein a range between 0,1 and 0,8 M per 1 L KOH is preferred, and wherein a maximal concentration is between 0,8 M and 1,5 M per 1 L KOH is preferred.

According to still another preferred embodiment of the electrochemical cell, the ZnO/KOH-ratio is independent of the KOH concentration.

According to still another preferred embodiment of the electrochemical cell, the zinc-comprising electrolyte further comprises Pb, Fe, Sn, CdMg or other metals or alloys. It may also be that the electrolyte comprises hydroxide additions of at least one of In-, Pb- and/or Sn-hydroxide in concentrations of 10 - 500 ppm based on the amount of ZnO in the electrolyte. Such addition can increase the hydrogen overvoltage and thus reduce self-discharge of a cell. It is also possible that the electrolyte comprises additions of at least one of an electrolyte additives and/or a surfactant such as a polyoxyethylene octadecenyl ether phosphate, a polyethylene glycol, a copolymer with acidic groups, a solution of modified styrene maleic acid copolymer, a solution of an alkylolammonium salt of a lower molecular weight polycarboxylic acid polymer, phosphate esters of an alkylphenoxy polyethoxyethanol, a polyether phosphate ester or a solution of octylphenoxypolyethoxyethylphosphate, water, phosphoric acid and polyethylene glycol octylphenyl ether. Such additives that are also used in alkaline primary batteries to reduce self-discharge can also be used for the present invention, e.g. electrolyte additives and/or surfactants such as a polyoxyethylene octadecenyl ether phosphate, a polyethylene glycol, a copolymer with acidic groups, a solution of modified styrene maleic acid copolymer, a solution of an alkylolammonium salt of a lower molecular weight polycarboxylic acid polymer, a phosphate ester of an alkylphenoxy polyethoxyethanol, a polyether phosphate ester, a polyether phosphate ester or a solution of octylphenoxypolyethoxyethylphosphate, water, phosphoric acid and polyethylene glycol octylphenyl ether. Such additives influence zinc passivation and thus the discharge and self-discharge behavior of an electrochemical cell.

According to the invention, a method for zinc electrodeposition in an electrochemical cell according to one of the aforementioned embodiments is provided, wherein the method comprises:

- using the electrochemical cell;
- applying 5% - 80% duty cycle pulses of 0 - 30 Hz, preferably of 5 - 20 Hz, more preferably of 10 Hz for zinc deposition onto the current collector material until a predetermined state of charge, SOC, and/or a predetermined mass of the zinc-layer is reached;
- applying pulses of 5 - 20 Hz and more preferably of 10 Hz until reaching a duty cycle of ≤ 8% - 1%, preferably of ≤ 5% - 2%, more preferably of 5% and/or a predetermined minimum current density of ≤ 10 $mA/cm^2$, preferably of ≤ 8 $mA/cm^2$, and more preferably of ≤ 5 $mA/cm^2$; and
- ending the method.

According to another preferred embodiment of the method, the method further comprises applying for the pulses a pulse current density in a range of 1 - 300 mA/cm$^2$, preferably in a range of 5 - 170 mA/cm$^2$, and more preferably in a range of 5 -125 mA/cm$^2$.

The method parameters as duty cycle, frequency or current density are optimized for charge time, charging efficiency and structure (meaning the deposition of a smooth solid zinc layer according to the invention). However, according to the invention low duty cycle (e.g. 5%) of 10 Hz together with a low current density (5 mA/cm$^2$) will charge all ZnO/zincate concentrations for a massive layer of zinc deposition (tenths to thousand mg/cm$^2$). However, the charge time is very long. To reduce charge time, higher current density is required. Two options for higher average current density can be applied:
(a) low duty cycle high current density or (b) high duty cycle low current density, both of them, (a) and (b), with the same average current density. The low duty cycle high current density option (a) will have lower electrical efficiency, the high duty cycle low current density option (b) will have better electrical efficiency.

As an example, using saturated zincate in 30% KOH: (a) 40% duty cycle 80 mAh/cm$^2$ or (b) 80% duty cycle 40 mA/cm2, both (a), (b) will plate < 100 mg Zn/cm$^2$. However, the 40 mA/cm$^2$ option (b) will become mossy if deposition of zinc approx. > 100 mg/cm$^2$. But if that is the thickness which is desired, 100 mg/cm$^2$ zinc deposited with option (b) will be more electrically efficient. Supersaturated zincate will require lower duty cycle lower current density until saturation point is reached and then 40 mA/cm$^2$ 80% duty cycle (option (a)) can be used. A combination can be used, starting with 40 mA/cm$^2$ 80% duty cycle (option (b)) and halfway switch to 40% duty cycle 80 mA/cm$^2$ (option (a)) and go beyond 100 mg/cm$^2$.

The parameters shown here are basic parameters with which a zinc electrode according to the invention can be obtained. However, it is understood that the pulsing parameters are for example impacted by zincate concentration (or other zinc-sources concentration), ZnO load meaning how thick/viscose the ZnO/KOH paste is applied. Further, it is also clear that these initial parameters will change during the deposition process, e.g. the charging progress, temperature, zinc load/cm$^2$. For the zinc deposition, 5% to 80% duty cycle pulses of 0 - 30 Hz, preferably of 5 - 20 Hz, more preferably of 10 Hz, up to the desired mass of the zinc deposition are applied for allowing the zincate ions to get close to the electrode surface and for the $OH^-$ into the bulk and to avoid $H_2$-evolution. All pulses are suitable for suppressing $H_2$ generation in order to prevent the formation of mossy or dendritic zinc deposits.

According to this invention, there are some conditions which allow a metallic solid non-powdery and non-mossy deposition of zinc during charging of an anode current collector material (negative electrode) in an electrochemical cell. However, not all conditions must actually be present for a zinc electrode to be prepared according to the invention, in other words not all conditions are essential, but it is merely advantageous if they are present.

Optionally, there should be no ions such as $Cu^+$ in the cell, such ions will promote $H_2$ evolution on charging causing mossy zinc deposition.

Moreover, no copper oxides or passivation on the surface of the current collector should be present, since such oxides could otherwise promote $H_2$ evolution on charging causing mossy zinc deposition.

Deposition parameters must be chosen in a way that no $H_2$ be evolved. $H_2$ bubbles causes zinc deposition around them, making mossy zinc. Actually high currents will cause $H_2$ evolution. The use of high current density will have a benefit primarily at the beginning of the deposition, depending on the substrate (current collector material or already deposited Zn layer). However, the pulsing is what eliminates the $H_2$ bubbles in the first place, not the high current densities. If depositing on a substrate made of material having a low $H_2$ overpotential, meaning it is a good $H_2$ evolving substrate or catalyst, then initial high current pulsing of 40mA/cm$^2$ and up for a duration of tenths of seconds is required to get an initial plating that blocks the activity of the catalytic nature of the substrate. Further, it is also beneficial to increase the number of nucleation sites on such substrates. Otherwise, the substrate will dissolve the deposition as it is being deposited. After the initial deposition, the currents should be reduced, otherwise mossy Zn will evolve.

The current collector material should be selected to have high $H_2$ overpotential to avoid $H_2$ evolution, so that when plating starts on bare current collector material no $H_2$ should be evolved.

Another important condition is time. Thus, time should be allowed for the consumed zincate ions to be replenished on the interface layer of the electrode/electrolyte. This is achieved by lowering the duty cycle, for example, if very thick ZnO paste (thick in the sense of the invention meaning here high viscose, high ZnO concentrated according to the other mentioned embodiments of the invention) that is located between Zn electrode and separator requires low duty cycle such as 10% but lower ZnO or zincate concentrations allows 80% duty cycle. However, as zincate is being depleted towards the end of charge, lower duty cycle should be applied.

According to another embodiment of the method, the method further comprises applying 5% - 80% duty cycle pulses of 0 - 30 Hz, preferably 5 - 20 Hz and more preferably 10 Hz with a current density $\geq$ 40 mA/cm$^2$. This first Zn deposition step is performed prior to the main zinc depositing step. For a current collector material with low $H_2$-overpotential, such as nickel, such a step is essential, since it prevents $H_2$-evolution, which could otherwise occur during a zinc deposition with the parameters described in the method according to the invention. In addition, with this step, the number of nucleation sites can be increased, which benefits a more uniform and improved zinc deposition in the next step. This increase in the number of nucleation sites is true for a material with high $H_2$-overpotential as well as for materials with

low $H_2$-overpotential, such as cold rolled low carbon steel. However, in case of cold rolled low carbon steel, such a step is not essential. Preferably, such a step is applied in the method of the invention when a bare current collector is present, i.e. when the method for zinc deposition in an electrochemical cell is applied for the first time with a bare current collector material or when the zinc layer has been completely detached from the current collector material by a previous discharge cycle or step.

According to another embodiment of the method, the method further comprises applying 5% - 10% duty cycle pulses of 1 - 100 kHz, preferably of 30 - 70 kHz, more preferably of 50 kHz for s seconds to m minutes in the case the electrochemical cell was partially or completely discharged before and passivation has been formed on the surface. Passivation on the surface should be detached prior to zinc deposition. Otherwise, plating on passivation will cause a mossy zinc deposition. However, passivation will be eventually dissolved when the zincate concentration gets low. Detaching the passivation is done by pulsing low duty cycle pulses of tenths of microseconds ($\mu$s) for a few seconds (e.g., 1 to 90 seconds, preferably 5 - 50 seconds, more preferred 30 seconds) to a few minutes at the beginning of the charging or deposition.

According to another embodiment of the method, the method further comprises monitoring the zinc-electrodeposition upon a spike in cell current and/or a drop in cell voltage, and if either a spike and/or a drop is present, immediately stopping the zinc-electrodeposition and ending the method. Such a spike and/or drop indicates a short which means that the zinc-deposition is probably mossy or dendritic. Such unwanted depositions are recovered by complete or partial discharge of the electrochemical cell meaning complete or partial removal of the zinc-layer. After this, a new zinc-deposition can be started (e.g. at SOC = 0, if fully discharged).

According to another embodiment of the method, the method further comprises monitoring the zinc-electrodeposition upon a predetermined cell current limit and/or a predetermined cell voltage limit, indicating a predetermined state of charge (SOC) and if the predetermined SOC is reached, applying pulses of 5 - 20 Hz and more preferably of 10 Hz until reaching a duty cycle of ≤ 8% - 1%, preferably ≤ 5% - 2%, more preferably of 5% and/or a predetermined minimum current density of ≤ 10m A/cm$^2$, preferably of ≤ 8 mA/cm$^2$, and more preferably of ≤5 mA/cm$^2$.

The parameters used to monitor the zinc electrodeposition can also vary depending on whether a special cell design is required or whether additional temperature control is required. Also, the parameters for the different states of charge can be fixed, or these can be dynamically adjusted by doing occasional fast impedance spectroscopy (EIS) during the charging, adjusting pulsing parameters accordingly for the purpose of expediting charging while avoiding shorts.

On the fly fast electrochemical impedance spectroscopy (EIS) can be done to get information on the condition of the cell and charging status. As an example, roughness of the surface can be indicated by EIS, high roughness will indicate mossy buildup, which is bad, low roughness indicates solid Zn buildup. EIS can be done before charging is started and shortly after and once every x time, indicating the presence of passivation, if the charging starts properly and if the Zn buildup maintains good Zn solid structure. Surface roughness is indicated by the electrochemical double-layer capacity. The higher the capacitance compared to the bare current collector capacity, the higher the surface area which means mossy plating buildup. The measurement can be done at several frequencies but doesn't need to be a continuous frequency scan. As long as the zinc buildup stays solid non-mossy with relatively low roughness, capacitance will stay quite similar to the bare current collector's capacity.

Further, the amount of electrolyte or amount of zincate and/or ZnO in the cell can be determined by the cell resistance (the real component of the impedance), which can be achieved by low frequency measurements. Further, passivation can be detected by EIS.

In a different scenario, if the zinc electrode is part of an electrochemical cell that includes a catalyst gas evolving electrode that produces oxygen during zinc deposition and $H_2$ during zinc dissolution, a recombination catalyst that is used as a safety device can also be used as a sensor. The recombination catalyst temperature can be monitored for out-of-control zinc buildup and for end of charge. In both cases $H_2$ will start evolving and since $O_2$ is present, the recombination catalyst temperature will start rising indicating that charging should be terminated. The same will happen in discharge conditions. If the recombination catalyst temperature rises, this is a hint that a cell reversed its polarity end electrolyzing, releasing $O_2$ and $H_2$ at the same time, thus discharge should be terminated.

Further, in another case of rechargeable zinc batteries, oxygen may evolve on the positive electrode in case of overcharge or hydrogen can evolve on the negative electrode depending which electrode has less active material. A gas passage can be implemented in the cell that the oxygen can recombine with hydrogen at a recombination catalyst or react with the zinc minus pole.

But it is also possible that the duty cycle is adapted to the already charged capacity and thus to the thickness of a zinc layer on the electrode and the ZnO/zincate concentration during charging. In general, the duty cycle can be increased during charging. For each type and size of electrochemical cell, the required charging parameter, duty cycle, can be determined as a function of current, state of charge, and temperature. This can be stored in a look-up table, which can then be used for discharging.

According to the invention, an electrochemical cell is provided for carrying out the inventive method.

It has also to be noted that aspects or embodiments of the invention have been described with reference to

different subject-matters. In particular, some aspects or embodiments have been described with reference to apparatus type claims whereas other aspects have been described with reference to method type claims. However, a person skilled in the art will gather from the above and the following description that, unless otherwise notified, in addition to any combination between features belonging to one type of subject-matter, also any combination between features relating to different types of subject-matters is considered to be disclosed with this text. In particular combinations between features relating to the apparatus type claims and features relating to the method type claims are considered to be disclosed. The invention and embodiments thereof will be described below in further detail in connection with the drawing(s).

Fig. 1 shows an image of a surface of a zinc deposit with heavy spongy micromorphology according to the state of the art adapted from R.Y. Wang et al., Journal of The Electrochemical Society, 153 (5) C357-C364 (2006*).*

Fig. 2 shows an image of a surface of a zinc deposit with dendritic micromorphology according to the state of the art, adapted from R.Y. Wang et al., Journal of The Electrochemical Society, 153 (5) C357-C364 (2006*).*

Fig. 3 shows an image of a surface of a zinc deposit with mossy micromorphology according to the state of the art, adapted from R.Y. Wang et al., Journal of The Electrochemical Society, 153 (5) C357-C364 (2006*).*

Fig. 4 shows an image of a surface of a zinc deposit with boulder micromorphology according to the state of the art, adapted from R.Y. Wang et al., Journal of The Electrochemical Society, 153 (5) C357-C364 (2006*).*

Fig. 5 shows an image of a surface of a zinc deposit with layerlike micromorphology according to the state of the art, adapted from R.Y. Wang et al., Journal of The Electrochemical Society, 153 (5) C357-C364 (2006*).*

Fig. 6 shows a table of a categorization of Zn deposits according to the state of the art, adapted from R.Y. Wang et al., Journal of The Electrochemical Society, 153 (5) C357-C364 (2006*).*

Fig. 7 shows a schematic illustration of an anode electrode electrodeposited with zinc developing a dendritic morphology according to the state of the art.

Fig. 8 shows a schematic illustration of an anode electrode electrodeposited with zinc developing a filamentous/-mossy morphology according to the state of the art.

Fig. 9 shows a schematic illustration of an anode electrode electrodeposited with zinc developing a solid metallic (layerlike) morphology according to an embodiment of the invention.

Fig. 10 shows a flow chart of method steps according to one embodiment of the invention for producing a zinc electrode as described in the present invention in an electrochemical cell.

Fig. 1 shows an image of a surface of a zinc deposit with heavy spongy micromorphology. As can be seen, heavy spongy deposits are large boulder agglomerates and highly branched dendrites, developing at very high current density (cd) and after long deposition time. Further, such deposits have a fine dispersed porosity and an anisotropically orientated crystallinity. Depending on their appearance, such deposits can be perceived by the human eye primarily as a blackish powder. However, such heavy spongy deposits are nonadherent, which leads to these layers crumbling away or parts of the layer detaching easily, e.g. in the event of minor vibrations or spontaneously.

Fig. 2 shows an image of a surface of a zinc deposit with dendritic micromorphology. Dendrites are treelike, leaf or fern structures and can be hexagonal if deposition is slow. The porosity of such deposits is dispersed, and they possess an isotopically orientated crystallinity. Depending on their appearance, such deposits can be recognized as metallic crystalline by the human eye. However, such deposits are nonadherent and can break easily depending on their structure. Another reason that makes such deposits unsuitable for some types of applications is that the spikes of the dendrites can penetrate or damage separators. Dendrites are mainly formed at a very high current density.

Fig. 3 shows an image of a surface of a zinc deposit with mossy micromorphology. Filamentous mossy deposits have the appearance of tangled whiskers with a typical diameter of 50 - 200 nm and lengths that can exceed 5 $\mu$m. Like dendrites and heavy spongy deposits, mossy deposits are also nonadherent. However, they have an extremely high porosity and an isotropically oriented crystallinity. They can primarily form at low current densities. Like heavy spongy deposits, they are primarily visible to the human eye as a blackish powdery layer. These mossy deposits tend to detach or break off, as can be anticipated from Fig. 3. When such a mossy deposit detaches from the electrode or zn deposited layer, these mossy filaments appear as cloud-like structures in the middle of an electrochemical cell between the two electrodes without being connected to them.

Further, Fig. 4 shows an image of a surface of a zinc deposit with boulder micromorphology. Boulders are typically hexagonal shape in discrete assemblies. Layer-by-layer growth on individual boulder deposits can be seen from Fig. 4. Boulder deposits have a granular boulder-like shape and possess mainly an anisotropically orientated crystallinity. Unlike the other aforementioned deposits, these deposits possess a very compact porosity which means they are mainly nonporous. Further, these deposits are adherend meaning that it is atypical and rare for parts of this layer to detach. To the human eye, such a boulder-like deposit appears as a greyish metal. It is assumed that such deposits can occur at a medium or moderate current density.

Fig. 5 shows an image of a surface of a zinc deposit with layerlike micromorphology. Layerlike deposits are of epitaxial growth and are typically found at the beginning of deposition. This type of Zn-deposit is probably the most compact and has almost no porosity. It is visible to the human eye as a shiny metal layer and has a ridge-like or layer-like microstructure with epitaxially oriented crystallinity. This deposit is highly adherent and detachment of parts of this layer is only possible with considerable force, so that under normal circumstances spontaneous detachment of parts of the layer does not occur. Occurrence of this layer has been observed mainly at low current densities. It is interesting, however, that although this layer often appears at the beginning of depositions, it has not been possible in the prior art to realize such a layer-like deposit over a longer deposition time or over a certain thickness of the layer. With all processes described in the prior art and Zn electrodes shown therein, a layer-like Zn deposit of a larger thickness could be shown so far. The only methods or electrodes that have shown such a layer-like deposit with the properties described here have used pure or treated zinc as the collector material. However, this makes no sense at all for commercial applications, since, for example, when such an electrode is used in a battery, it completely disappears during discharge.

In Fig. 6 a table is depicted of a categorization of Zn deposits according to the state of the art. As can be seen from the table, various properties such as appearance with unaided eye, microstructure (under microscope), adherence, porosity, crystallinity, or growth current density can be assigned to the individual Zn-deposits.

In Fig. 7 a schematic illustration is shown of a zinc electrode 100 with electrodeposited zinc developing a dendritic morphology 310. As shown in this figure, Zn is deposited on an anode current collector material 200 during electrodeposition. Initially, the Zn layer 300 is still very homogeneous, but with increasing layer thickness or duration of the electrodeposition, a shape change of the Zn layer begins. This now forms dendrites, which can break off or damage other components of an electrical cell such as a separator. Short circuits can also occur due to the detaching dendrite parts. The formation of such a dendrite layer can have several causes. One reason which was identified to have a huge impact on dendrite formation is the application of a very high current capacity during deposition.

Further, in Fig. 8 a schematic illustration is shown of a zinc electrode 100 with electrodeposited zinc developing a mossy morphology 320. Fig. 8 shows that after the initial compact deposition of zinc (zinc layer 300) on an anode collector material 200, a shape change occurs. The following deposit has a filamentous or mossy structure 320. This, as well as the structures of dendritic zinc or other non-compact structures like heavy spongy zinc, show a poor adherence to the substrate. These mossy zinc deposits can easily detach from the already deposited zinc or the collector material. These detached mossy Zn-deposits are usually visible as whitish, cloudy structures in the center, i.e. between the electrodes, of an electrochemical cell, sometimes with the naked eye. For example, flowing electrolyte can easily mechanically detach these mossy zinc deposits, which would result in capacity loss or blockage of the electrolyte in a flow application. Mossy zinc morphologies can occur due to very low current capacities during electrodeposition. Also, gas generation, mostly due to hydrogen gas generated during electrodeposition, can favor the formation of mossy zinc deposits.

Fig. 9 shows a schematic illustration of an anode electrode 100 electrodeposited with zinc developing a solid metallic (layerlike) morphology according to an embodiment of the invention. Fig. 9 shows an enormous deposit of a solid metallic zinc layer 300 directly on a collector material 200 of an anode electrode 100. This metallic zinc layer 300 has a layerlike and/or boulderlike morphology and exhibits a high density very close to that of pure metallic zinc. The layer 300 is compact throughout, and adheres firmly to the substrate and possesses a smooth surface 330. This compact layer 300 has almost no porosity. To the eye, the layer surface 330 appears greyish/shiny metallic or metallic shiny. The electrode 100 according to the invention can have layer thicknesses of well over 200mg/cm$^2$ plated zinc.

Fig. 10 shows a flow chart of a method according to one embodiment of the invention for producing a zinc electrode as described in the present invention in an electrochemical cell. An electrochemical cell comprises an anode collector material, a cathode collector material and a suitable electrolyte. For the sake of the invention, electrochemical cell is defined as a generic term for various arrangements either used in electrochemistry or based on electrochemical processes. In this context, electrochemical cell includes galvanic cell, electrolytic cell as well as accumulator cell. An electrochemical cell contains at least two electrodes or collector source materials, which always act as electron conductors, and at least one electrolyte, i.e. an ion conductor. The electrolyte may be liquid or solid, having a certain viscosity. An electrochemical cell can thus be defined as an arrangement of two electrodes conductively connected via a zinc-comprising electrolyte.

In a first step S100, a cell is provided having a zinc-comprising electrolyte, an anode collector material, and a cathode collector material. It is understood that the cell is designed so that the two collector materials (which can also already be described as starting electrodes) are conductively connected via a zinc-comprising electrolyte. This also

encompasses all components such as housing, current source, voltage source, other measuring devices, etc.

Further, an optional step S200 can be implemented, in the case the deposition is done for the first time and/or a completely discharged current collector material having no zinc layer on it is used, and, additionally, the current collector has a low $H_2$-overpotential. Then, this step is mandatory to suppress the $H_2$-evolution at the current collector material in a further zinc deposition step (see S300), in other words, to block the catalytic activity of this current collector substrate. Also, this step is beneficial to increase the nucleation sides on the substrate to enhance layer formation. This step S200 is carried out by, for example, applying 5% - 80% duty cycle pulses of 0 - 30 Hz, preferably 5 - 20 Hz and more preferably 10 Hz with a high current density ≥ 40 mA/cm$^2$.

Another optional step S250 can be applied, comprising 5% - 10% duty cycle pulses of tenths of μs of 1 - 100 kHz for s seconds to m minutes (e.g., preferred ≤ 30 seconds) at the beginning of the zinc deposition process. This step is beneficial to detach some passivation which may have occurred during a previous discharging of the cell or if the cell was stored in a semi discharged state for a longer period, since plating on passivation leads to mossy zinc deposition.

However, then, in step S300 the actual zinc deposition takes place. If a new cell with fresh electrolyte and a bare current collector with a high $H_2$-overpotential is available, the zinc deposition can be started immediately in step S300. In all other cases, step S200 and/or S250 must take place before step S300. In step S300, 5% - 80% duty cycle pulses of 1 - 30 Hz, preferably of 5 - 20 Hz, more preferably of 10 Hz are applied for zinc deposition. This step is carried out until a predetermined mass of the zinc deposition has been reached or the zinc deposition has been stopped for other reasons like a predetermined charging stop or in rare cases the occurrence of a circuit short. The duty cycle depends on the amount of the zinc source, in most cases this is ZnO and/or zincate. As the zinc layer is depleted and the zincate level gets low, the duty cycle and current density is reduced (see step S400).

In case of interruption of the charging at any step as well as storing the charged cell and start further charging, step S250 can be implemented again. It comprises 5% - 10% duty cycle pulses of tenths of μs of 1 - 100 kHz for s seconds to m minutes (e.g., preferred ≤ 30 seconds) at the beginning of the new zinc deposition process. This step is beneficial to detach some passivation which may have occurred during a previous discharging of the cell or if the cell was stored in a semi discharged state for a longer period, since plating on passivation leads to mossy zinc deposition.

In optional steps S310 and/or S320, the cell can also be monitored and inspected during zinc deposition. This can be done continuously or at intervals. If a drop in voltage and/or a rise in current (a short circuit) occurs during zinc electrodeposition, the deposition process is stopped (see step S500), since a mossy deposition of zinc has very likely occurred (S310). In such a case the cell should be discharged and then, after a passivation detaching step, (S250) a new deposition can start. However, if "no short circuit" means no mossy deposition occurs, monitoring can also track the desired predetermined charge status, or the state of charge (SOC) using current/voltage parameters and stop at the desired predetermined zinc layer mass (S320).

Subsequently, in step S400, pulses of 5 - 20 Hz, more preferably of 10 Hz are applied until reaching a duty cycle of ≤ 8% - 1%, preferably of ≤ 5% - ≤ 2% and/or a predetermined minimum current density of ≤ 10 mA/cm$^2$, preferably of ≤ 8 mA/cm$^2$, and more preferably of ≤ 5 mA/cm$^2$.

After that step, or in case a circuit short occurs, the zinc deposition is terminated (S500). The cell could now be discharged again.

It is also possible to remove the zinc loaded electrode from the cell for storage or transportation purposes. In the event of a short circuit, the cell should be fully discharged, and a new deposition process should be started to achieve zinc deposition in accordance with the invention.

It should be noted that the term "comprising" does not exclude other elements or steps and the "a" or "an" does not exclude a plurality. Further, elements described in association with different embodiments may be combined.

It should also be noted that reference signs in the claims shall not be construed as limiting the scope of the claims.

Reference numerals

| | |
|---|---|
| 100 | zinc electrode |
| 200 | current collector material |
| 300 | zinc layer |
| 310 | dendritic zinc layer surface |
| 311 | detached dendrites |
| 320 | mossy zinc layer surface |
| 321 | detached mossy zinc |
| 330 | solid metallic zinc layer surface (layerlike) |
| S100 - S500 | method steps S100 to S500 |

## Claims

1. A zinc electrode (100), obtainable by a method according to any one of the claims 21 to 27, comprising a current collector material (200) on which a zinc layer (300) is electrodeposited, wherein the zinc layer (300) appears as compact solid metal, comprises a boulder-like and/or layerlike microstructure and is adherent with a compact porosity.

2. The zinc electrode (100) according to claim 1, wherein the zinc layer (300) is partially or completely removed from the current collector material (200) during a discharge cycle resulting in a bare current collector material (200) in case of a complete removal.

3. The zinc electrode (100) according to claim 1 or 2, wherein the zinc layer (300) is electrodeposited on a bare current collector material (200) or on a current collector material (200) on which a zinc layer (300) is already electrodeposited.

4. The zinc electrode (100) according to any of the proceeding claims, wherein the zinc layer (300) comprises a density of 3,50 - 7,14 g/cm$^3$, preferably 4,50 - 7,14 g/cm$^3$, more preferably 5,00 - 7,00 g/cm$^3$.

5. The zinc electrode (100) according to any of the proceeding claims wherein neither the current collector material (200) nor the zinc layer (300) comprises a binder, a grid, a foam, a fabric structure, or an additive to couple the zinc layer (300) to the current collector material (200).

6. The zinc electrode (100) according to any of the proceeding claims, wherein the zinc layer (300) is made from non-powder zinc.

7. The zinc electrode (100) according to any of the proceeding claims, wherein the current collector material (200) is selected from the group comprising one or more of steel, low carbon steel, nickel, nickel plated steel, nickel plated low carbon steel, or NiP covered steel.

8. The zinc electrode (100) according to any of the proceeding claims, wherein the current collector material (200) is cold formed, preferably cold rolled.

9. The zinc electrode (100) according to any of the proceeding claims, wherein the zinc layer (300), the zinc-comprising, the zinc-comprising electrolyte, the current collector material and/or the cathode is free of copper, copper ions and/or copper oxides.

10. The zinc electrode (100) according to any of the proceeding claims, wherein the zinc layer (300) has a mass of up to 10000 mg/cm$^2$, preferably 5000 mg/cm$^2$ and more preferably 2000 mg/cm$^2$.

11. The zinc electrode (100) according to any of the proceeding claims, wherein the zinc layer (300) has a mass of at least 25 mg/cm$^2$.

12. An electrochemical cell comprising a zinc electrode according to one of the claims 1 - 11 for zinc electrodeposition further comprising:

    - a zinc-comprising electrolyte,
    - a cathode.

13. The electrochemical cell according to claim 12, wherein the zinc-comprising electrolyte is alkaline.

14. The electrochemical cell according to claim 12 or 13, wherein the zinc-comprising electrolyte and/or a current collector material (200) and/or the cathode is free of copper.

15. The electrochemical cell according to claims 12 to 14, wherein the zinc-comprising electrolyte comprises a zinc-source being selected from the group comprising one or more of $Zn^{2+}$-ions, ZnO, zincate, or zinc-complexes.

16. The electrochemical cell according to claim 15, wherein the zinc-source or at least one component of the zinc-source is supersaturated after the cell is discharged.

17. The electrochemical cell according to claims 12 to 16, wherein the zinc-comprising electrolyte comprises KOH.

**18.** The electrochemical cell according to claims 12 to 17, wherein the zinc-comprising electrolyte, when it is applied to a new electrochemical cell, has a minimal ZnO/KOH-ratio of 190,00 g ZnO in 1 L KOH, wherein a minimal ZnO/KOH-ratio of 100,00 g ZnO in 1 L KOH being preferred, and a minimal ZnO/KOH-ratio of 8,00 g ZnO in 1 L KOH being preferentially preferred and/or wherein the zinc-comprising electrolyte has a maximal ZnO/KOH-ratio of 2380,00 g ZnO in 1 L KOH, wherein a maximal ZnO/KOH-ratio of 2670,00 g ZnO in 1 L KOH being preferred, and a maximal ZnO/KOH-ratio of 2980,00 g ZnO in 1 L KOH being preferentially preferred.

**19.** The electrochemical cell according to claims 12 to 18, wherein the zinc-comprising electrolyte comprises a minimal ZnO concentration of 0,01 M per 1 L KOH in $H_2O$ electrolyte, wherein a range between 0,1 and 0,8 M per 1 L KOH is preferred, and/or wherein a maximal concentration is preferably between 0,8 and 1,5 M per 1 L KOH.

**20.** The electrochemical cell according to claim 19, wherein the ZnO/KOH-ratio is independent of the KOH concentration.

**21.** A method for zinc electrodeposition in an electrochemical cell according to one of the claims 12 to 20, wherein the method comprises:

- S100, using the electrochemical cell;
- S300, applying 5% - 80% duty cycle pulses of 5 - 20 Hz for zinc deposition onto the current collector material (200) until a predetermined state of charge, SOC, and/or a predetermined mass of the zinc-layer (300) is reached;
- S400, applying pulses of 5 - 20 Hz and more preferably of 10 Hz until reaching a duty cycle of ≤ 8% - 1%, preferably ≤ 5% - 2%, more preferably of 5% and/or a predetermined minimum current density of ≤ 10m $A/cm^2$, preferably of ≤ 8 $mA/cm^2$, and more preferably of ≤5 $mA/cm^2$; and
- S500, ending the method.

**22.** The method for producing a zinc electrode according to claim 21, wherein the method further comprises applying for the pulses a pulse current density of 1 - 300 $mA/cm^2$, preferably of 3 - 170 $mA/cm^2$ and more preferably of 5 -125 $mA/cm^2$.

**23.** The method for producing a zinc electrode according to the claim 21 or 22, wherein before step S300 the method further comprises step S200, applying 5% - 80% duty cycle pulses of 0 - 30 Hz, preferably 5 - 20 Hz and more preferably 10 Hz with a current density ≥ 40 $mA/cm^2$.

**24.** The method for producing a zinc electrode according to any of the claims 21 to 23, wherein before step S300 the method further comprises step S250, applying 5% - 10% duty cycle pulses of 1 kHz - 100 kHz, preferably 30 - 70 kHz, more preferably 50 kHz for s seconds to m minutes in the case the electrochemical cell was partially or completely discharged before.

**25.** The method for producing a zinc electrode according to any of the claims 21 to 24, wherein the method further comprises S310, monitoring the zinc-electrodeposition upon a spike in cell current and/or a drop in cell voltage, and if either a spike and/or a drop is present, immediately stopping the zinc-electrodeposition and ending method S500.

**26.** The method for producing a zinc electrode according to any of the claims 21 to 25, wherein the method further comprises S320, monitoring the zinc-electrodeposition upon a predetermined cell current limit and/or a predetermined cell voltage limit indicating the predetermined state of charge, SOC, and if the predetermined SOC is reached, applying steps S400 and S500.

## Patentansprüche

**1.** Zinkelektrode (100), erhältlich durch ein Verfahren nach einem der Ansprüche 21 bis 27, umfassend ein Stromkollektormaterial (200), auf dem eine Zinkschicht (300) elektrolytisch abgeschieden ist, wobei die Zinkschicht (300) frei von Kupfer (Cu) ist und als kompaktes Vollmetall erscheint, eine blockförmige und/oder schichtförmige Mikrostruktur aufweist und mit einer kompakten Porosität anhaftet.

**2.** Zinkelektrode (100) nach Anspruch 1, wobei die Zinkschicht (300) während eines Entladungszyklus teilweise oder vollständig von dem Stromkollektormaterial (200) entfernt wird, was im Falle einer vollständigen Entfernung zu einem blanken Stromkollektormaterial (200) führt.

3. Zinkelektrode (100) nach Anspruch 1 oder 2, wobei die Zinkschicht (300) elektrolytisch auf einem blanken Stromkollektormaterial (200) oder auf einem Stromkollektormaterial (200) abgeschieden wird, auf dem bereits eine Zinkschicht (300) elektrolytisch abgeschieden ist.

4. Zinkelektrode (100) nach einem der vorhergehenden Ansprüche, wobei die Zinkschicht (300) eine Dichte von 3,50 - 7,14 g/cm$^3$, vorzugsweise 4,50 - 7,14 g/cm$^3$, besonders bevorzugt 5,00 - 7,00 g/cm$^3$ aufweist.

5. Zinkelektrode (100) nach einem der vorhergehenden Ansprüche, wobei weder das Stromkollektormaterial (200) noch die Zinkschicht (300) ein Bindemittel, ein Gitter, einen Schaum, eine Gewebestruktur oder einen Zusatzstoff zum Verbinden der Zinkschicht (300) mit dem Stromkollektormaterial (200) umfasst.

6. Zinkelektrode (100) nach einem der vorhergehenden Ansprüche, wobei die Zinkschicht (300) aus nicht pulverförmigem Zink hergestellt ist.

7. Zinkelektrode (100) nach einem der vorhergehenden Ansprüche, wobei das Stromkollektormaterial (200) aus der Gruppe ausgewählt ist, die einen oder mehrere der folgenden Werkstoffe umfasst: Stahl, kohlenstoffarmer Stahl, Nickel, vernickelter Stahl, vernickelter kohlenstoffarmer Stahl oder mit NiP beschichteter Stahl.

8. Zinkelektrode (100) nach einem der vorhergehenden Ansprüche, wobei das Stromkollektormaterial (200) kaltgeformt, vorzugsweise kaltgewalzt ist.

9. Zinkelektrode (100) nach einem der vorhergehenden Ansprüche, wobei die Zinkschicht (300), der zinkhaltige Elektrolyt, das Stromkollektormaterial und/oder die Kathode frei von Kupfer, Kupferionen und/oder Kupferoxiden ist.

10. Zinkelektrode (100) nach einem der vorhergehenden Ansprüche, wobei die Zinkschicht (300) eine Masse von bis zu 10000 mg/cm$^2$, vorzugsweise 5000 mg/cm$^2$ und besonders bevorzugt 2000 mg/cm$^2$ aufweist.

11. Zinkelektrode (100) nach einem der vorhergehenden Ansprüche, wobei die Zinkschicht (300) eine Masse von mindestens 25 mg/cm$^2$ aufweist.

12. Elektrochemische Zelle mit einer Zinkelektrode nach einem der Ansprüche 1 bis 11 zur elektrolytischen Abscheidung von Zink, ferner umfassend:

- einen Zink enthaltenden Elektrolyten,
- eine Kathode.

13. Elektrochemische Zelle nach Anspruch 12, wobei der Zink enthaltende Elektrolyt alkalisch ist.

14. Elektrochemische Zelle nach Anspruch 12 oder 13, wobei der Zink enthaltende Elektrolyt und/oder ein Stromkollektormaterial (200) und/oder die Kathode kupferfrei sind.

15. Elektrochemische Zelle nach einem der Ansprüche 12 bis 14, wobei der Zink enthaltende Elektrolyt eine Zinkquelle umfasst, die aus der Gruppe ausgewählt ist, die einen oder mehrere der folgenden Stoffe umfasst: Zn2+-Ionen, ZnO, Zinkat oder Zinkkomplexe.

16. Elektrochemische Zelle nach Anspruch 15, wobei die Zinkquelle oder mindestens eine Komponente der Zinkquelle nach der Entladung der Zelle übersättigt ist.

17. Elektrochemische Zelle nach einem der Ansprüche 12 bis 16, wobei der Zink enthaltende Elektrolyt KOH umfasst.

18. Elektrochemische Zelle nach einem der Ansprüche 12 bis 17, wobei der Zink enthaltende Elektrolyt, wenn dieser in eine neue elektrochemische Zelle eingebracht wird, ein minimales ZnO/KOH-Verhältnis von 190,00g ZnO in 1 L KOH aufweist, wobei ein minimales ZnO/KOH-Verhältnis von 100,00g ZnO in 1 L KOH bevorzugt ist und ein minimales ZnO/KOH-Verhältnis von 8,00g ZnO in 1 L KOH besonders bevorzugt ist, und/oder wobei der Zink enthaltende Elektrolyt ein maximales ZnO/KOH-Verhältnis von 2380,00g ZnO in 1 L KOH aufweist, wobei ein maximales ZnO/KOH-Verhältnis von 2670,00g ZnO in 1 L KOH bevorzugt ist und ein maximales ZnO/KOH-Verhältnis von 2980,00g ZnO in 1 L KOH besonders bevorzugt ist.

19. Elektrochemische Zelle nach einem der Ansprüche 12 bis 18, wobei der Zink enthaltende Elektrolyt eine minimale ZnO-Konzentration von 0,01 M pro 1 L KOH in $H_2O$-Elektrolyt aufweist, wobei ein Bereich zwischen 0,1 und 0,8 M pro 1 L KOH bevorzugt ist, und/oder wobei eine maximale Konzentration vorzugsweise zwischen 0,8 und 1,5 M pro 1 L KOH liegt.

20. Elektrochemische Zelle nach Anspruch 19, wobei das ZnO/KOH-Verhältnis unabhängig von der KOH-Konzentration ist.

21. Verfahren zur elektrolytischen Abscheidung von Zink in einer elektrochemischen Zelle nach einem der Ansprüche 12 bis 20, wobei das Verfahren umfasst:

- S100, Verwendung der elektrochemischen Zelle;
- S300, Anlegen von Impulsen von 5 - 20 Hz mit einem Tastgrad von 5% - 80% zur Zinkabscheidung auf das Stromkollektormaterial (200), bis ein vorbestimmter Ladezustand, SOC, und/oder eine vorbestimmte Masse der Zinkschicht (300) erreicht ist, wobei die Zinkschicht frei von Kupfer (Cu) ist;
- S400, Anlegen von Impulsen von 5 - 20 Hz und vorzugsweise von 10 Hz, bis ein Tastgrad von ≤ 8 % - 1 %, vorzugsweise ≤ 5 % - 2 %, besonders bevorzugt von 5 % und/oder einer vorbestimmten Mindeststromdichte von ≤ 10m $A/cm^2$, vorzugsweise von ≤ 8 $mA/cm^2$ und besonders bevorzugt von ≤ 5 $mA/cm^2$, erreicht ist; und
- S500, Beenden des Verfahrens.

22. Verfahren zur Herstellung einer Zinkelektrode nach Anspruch 21, wobei das Verfahren ferner das Anlegen einer Impulsstromdichte von 1 - 300 mA/cm2, vorzugsweise von 3 - 170 $mA/cm^2$ und besonders bevorzugt von 5 - 125 $mA/cm^2$ für die Impulse umfasst.

23. Verfahren zur Herstellung einer Zinkelektrode nach Anspruch 21 oder 22, wobei das Verfahren vor dem Schritt S300 ferner den Schritt S200 umfasst, bei dem Impulse von 0 - 30 Hz, vorzugsweise 5 - 20 Hz und besonders bevorzugt 10 Hz mit einem Tastgrad von 5% - 80%, mit einer Stromdichte ≥ 40 $mA/cm^2$ angelegt werden.

24. Verfahren zur Herstellung einer Zinkelektrode nach einem der Ansprüche 21 bis 23, wobei das Verfahren vor dem Schritt S300 ferner den Schritt S250 umfasst, bei dem Impulse von 1 kHz - 100 kHz, vorzugsweise 30 - 70 kHz, besonders bevorzugt 50 kHz mit einem Tastgrad von 5% - 10% für s Sekunden bis m Minuten angelegt werden, falls die elektrochemische Zelle zuvor teilweise oder vollständig entladen wurde.

25. Verfahren zur Herstellung einer Zinkelektrode nach einem der Ansprüche 21 bis 24, wobei das Verfahren ferner umfasst: S310, Überwachen der elektrolytischen Zinkabscheidung bei einer Spitze im Zellenstrom und/oder einem Abfall der Zellenspannung, und wenn entweder eine Spitze und/oder ein Abfall vorhanden ist, sofortiges Stoppen der elektrolytischen Zinkabscheidung und Beenden des Verfahrens S500.

26. Verfahren zur Herstellung einer Zinkelektrode nach einem der Ansprüche 21 bis 25, wobei das Verfahren ferner umfasst: S320, Überwachen der Zink-Elektroabscheidung bei Erreichen einer vorbestimmten Zellstromgrenze und/oder einer vorbestimmten Zellspannungsgrenze, die den vorbestimmten Ladezustand, SOC, anzeigt, und wenn der vorbestimmte SOC erreicht ist, Anwenden der Schritte S400 und S500.

## Revendications

1. Électrode en zinc (100), obtenue par un procédé selon l'une des revendications 21 à 27, comprenant un matériau collecteur de courant (200) sur lequel une couche de zinc (300) est électrodéposée, la couche de zinc (300) étant exempte de cuivre (Cu) et se présentant comme un métal solide compact, comprenant une microstructure en forme de bloc et/ou de couche et étant adhérante avec une porosité compacte.

2. Électrode en zinc (100) selon la revendication 1, dans laquelle la couche de zinc (300) est partiellement ou totalement retirée du matériau collecteur de courant (200) au cours d'un cycle de décharge, ce qui donne un matériau collecteur de courant (200) nu en cas de retrait complet.

3. Électrode en zinc (100) selon la revendication 1 ou 2, dans laquelle la couche de zinc (300) est électrodéposée sur un matériau collecteur de courant (200) nu ou sur un matériau collecteur de courant (200) sur lequel une couche de zinc (300) est déjà électrodéposée.

4. Électrode en zinc (100) selon l'une des revendications précédentes, dans laquelle la couche de zinc (300) a une densité de 3,50 à 7,14 g/cm$^3$, de préférence de 4,50 à 7,14 g/cm$^3$, et de préférence plus particulière de 5,00 à 7,00 g/cm$^3$.

5. L'électrode en zinc (100) selon l'une des revendications précédentes, dans laquelle ni le matériau collecteur de courant (200) ni la couche de zinc (300) ne comprennent un liant, une grille, une mousse, une structure de tissu ou un additif pour relier la couche de zinc (300) au matériau collecteur de courant (200).

6. Électrode en zinc (100) selon l'une des revendications précédentes, dans laquelle la couche de zinc (300) est constituée de zinc non pulvérulent.

7. Électrode en zinc (100) selon l'une des revendications précédentes, dans laquelle le matériau collecteur de courant (200) est choisi dans le groupe comprenant un ou plusieurs éléments parmi l'acier, l'acier à faible teneur en carbone, le nickel, l'acier nickelé, l'acier à faible teneur en carbone nickelé ou l'acier recouvert de NiP.

8. Électrode en zinc (100) selon l'une des revendications précédentes, dans laquelle le matériau collecteur de courant (200) est formé à froid, de préférence laminé à froid.

9. Électrode en zinc (100) selon l'une des revendications précédentes, dans laquelle la couche de zinc (300), l'électrolyte contenant du zinc, le matériau collecteur de courant et/ou la cathode sont exempts de cuivre, d'ions de cuivre et/ou d'oxydes de cuivre.

10. Électrode en zinc (100) selon l'une des revendications précédentes, dans laquelle la couche de zinc (300) a une masse allant jusqu'à 10000 mg/cm$^2$, de préférence 5000 mg/cm$^2$ et plus préférablement 2000 mg/cm$^2$.

11. Électrode en zinc (100) selon l'une des revendications précédentes, dans laquelle la couche de zinc (300) a une masse d'au moins 25 mg/cm$^2$.

12. Cellule électrochimique comprenant une électrode en zinc selon l'une des revendications 1 à 11 pour l'électrodéposition du zinc, comprenant également:

- un électrolyte contenant du zinc,
- une cathode.

13. Cellule électrochimique selon la revendication 12, dans laquelle l'électrolyte contenant du zinc est alcalin.

14. Cellule électrochimique selon la revendication 12 ou 13, dans laquelle l'électrolyte contenant du zinc et/ou un matériau collecteur de courant (200) et/ou la cathode sont exempts de cuivre.

15. Cellule électrochimique selon les revendications 12 à 14, dans laquelle l'électrolyte contenant du zinc comprend une source de zinc choisie dans le groupe comprenant un ou plusieurs éléments parmi les éléments suivants: ions Zn2+, ZnO, zincate ou complexes de zinc.

16. Cellule électrochimique selon la revendication 15, dans laquelle la source de zinc ou au moins un composant de la source de zinc est sursaturé après la décharge de la cellule.

17. Cellule électrochimique selon les revendications 12 à 16, dans laquelle l'électrolyte contenant du zinc comprend du KOH.

18. Cellule électrochimique selon les revendications 12 à 17, dans laquelle l'électrolyte contenant du zinc, lorsqu'il est appliqué à une nouvelle cellule électrochimique, présente un rapport ZnO/KOH minimal de 190,00g ZnO dans 1 L KOH, un rapport ZnO/KOH minimal de 100,00g ZnO dans 1 L KOH étant préféré, et un rapport ZnO/KOH minimal de 8,00g de ZnO dans 1 L de KOH étant particulièrement préféré, et/ou dans laquelle l'électrolyte contenant du zinc présente un rapport ZnO/KOH maximal de 2380,00g de ZnO dans 1 L de KOH, un rapport ZnO/KOH maximal de 2670,00g de ZnO dans 1 L de KOH étant préféré, et un rapport ZnO/KOH maximal de 2980,00g de ZnO dans 1 L de KOH étant particulièrement préféré.

19. Cellule électrochimique selon les revendications 12 à 18, dans laquelle l'électrolyte contenant du zinc comprend une

concentration minimale de ZnO de 0,01 M pour 1 L de KOH dans l'électrolyte $H_2O$, une plage comprise entre 0,1 et 0,8 M pour 1 L de KOH étant préférée, et/ou une concentration maximale étant de préférence comprise entre 0,8 et 1,5 M pour 1 L de KOH.

**20.** Cellule électrochimique selon la revendication 19, dans laquelle le rapport ZnO/KOH est indépendant de la concentration de KOH.

**21.** A method for zinc electrodeposition in an electrochemical cell according to one of the claims 12 to 20, wherein the method comprises: Procédé d'électrodéposition du zinc dans une cellule électrochimique selon l'une des revendications 12 à 20, le procédé comprenant:

- S100, l'utilisation de la cellule électrochimique;
- S300, l'application d'impulsions de 5 à 20 Hz avec un rapport cyclique de 5% à 80% pour le dépôt de zinc sur le matériau collecteur de courant (200) jusqu'à ce qu'un état de charge prédéterminé, SOC, et/ou une masse prédéterminée de la couche de zinc (300) soient atteints, la couche de zinc étant exempte de cuivre (Cu);
- S400, l'application d'impulsions de 5 - 20 Hz et de préférence de 10 Hz jusqu'à atteindre un rapport cyclique de ≤ 8% - 1%, de préférence ≤ 5% - 2%, plus préférablement de 5%, et/ou une densité de courant minimale prédéterminée de ≤ 10m $A/cm^2$, de préférence de ≤ 8 $mA/cm^2$, et plus préférablement de ≤ 5 $mA/cm^2$ ; et
- S500, fin du procédé.

**22.** Procédé de production d'une électrode en zinc selon la revendication 21, consistant également à appliquer pour les impulsions une densité de courant d'impulsion de 1 à 300 $mA/cm^2$, de préférence de 3 à 170 $mA/cm^2$ et plus préférablement de 5 à 125 $mA/cm^2$.

**23.** Procédé de production d'une électrode en zinc selon la revendication 21 ou 22, comprenant également, avant l'étape S300, l'étape S200 consistant à appliquer des impulsions de 0 à 30 Hz, de préférence de 5 à 20 Hz et plus préférablement de 10 Hz avec un rapport cyclique de 5 % à 80 %, avec une densité de courant ≥ 40 $mA/cm^2$.

**24.** Procédé de production d'une électrode en zinc selon l'une des revendications 21 à 23, dans lequel, avant l'étape S300, le procédé comprend également l'étape S250 consistant à appliquer des impulsions de 1 kHz à 100 kHz, de préférence de 30 à 70 kHz, et de préférence plus particulière de 50 kHz avec un rapport cyclique de 5 % à 10 % pendant s secondes à m minutes dans le cas où la cellule électrochimique a été partiellement ou complètement déchargée auparavant.

**25.** Procédé de production d'une électrode en zinc selon l'une des revendications 21 à 24, comprenant également S310 la surveillance de l'électrodéposition du zinc lors d'un pic du courant de la cellule et/ou d'une chute de la tension de la cellule, et, au cas où un pic et/ou une chute est présent, l'arrêt immédiat de l'électrodéposition du zinc et la fin du procédé S500.

**26.** Procédé de production d'une électrode en zinc selon l'une des revendications 21 à 25, comprenant également S320, la surveillance de l'électrodéposition du zinc à une limite de courant de cellule prédéterminée et/ou une limite de tension de cellule prédéterminée indiquant l'état de charge prédéterminé, SOC, et si le SOC prédéterminé est atteint, l'application des étapes S400 et S500.

FIG. 1 state of the art

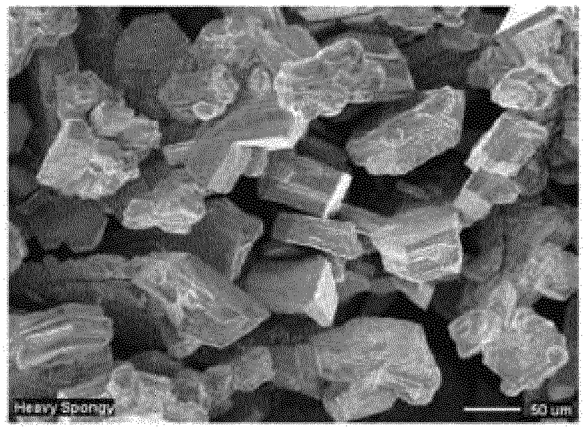


FIG. 2 state of the art

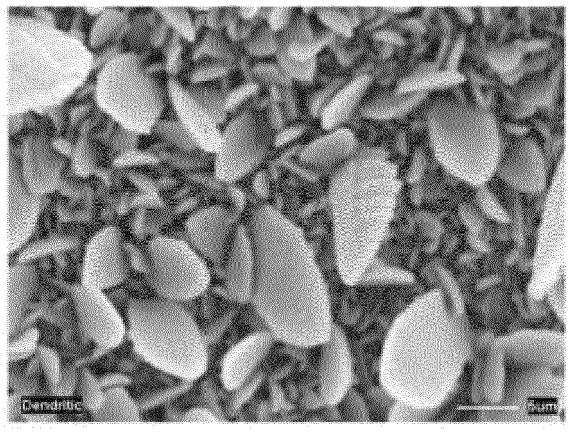


FIG. 3 state of the art

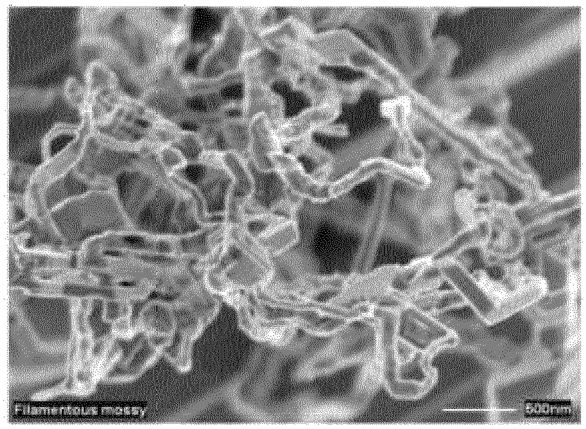


FIG. 4 state of the art

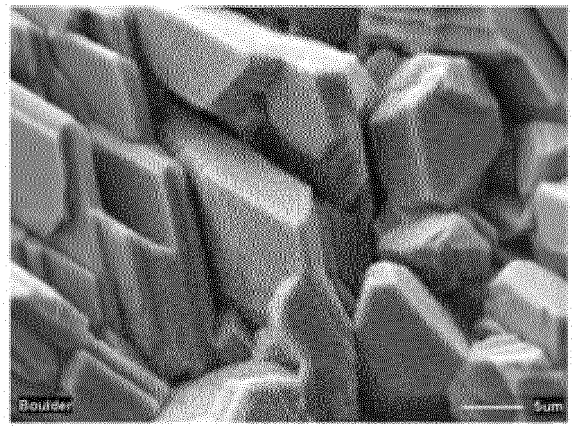


FIG. 5 state of the art

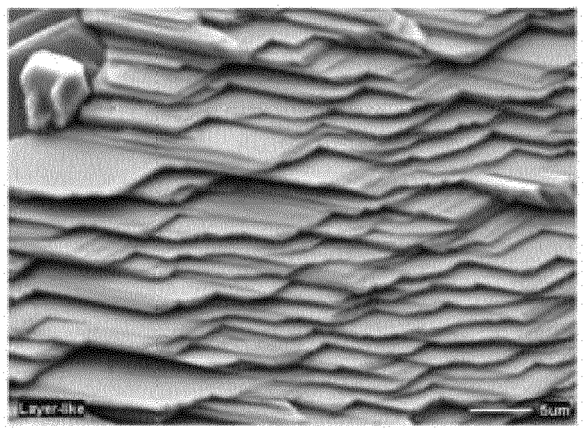

FIG. 6 state of the art

| Category | Heavy spongy | Dendritic | Boulder | Layerlike | Mossy |
|---|---|---|---|---|---|
| Appearance (unaided eye) | Black powder | Metallic crystal | Gray metal | Shiny metal | Black powder |
| Microstructure (under microscope) | Agglomerate large boulder | Fern, leaf, hexagon | Granular boulder | Ridge, layerlike | Filament, whisker |
| Adherence | Nonadherent | Nonadherent | Adherent | Adherent | Nonadherent |
| Porosity | Dispersed | Dispersed | Compact | Compact | Highly porous |
| Crystallinity[a] | Anisotropically oriented | Isotropically oriented | Anisotropically oriented | Epitaxial oriented | Isotropically oriented |
| Growth cd | Highest | Very high | Moderate | Low | Lowest |
| Nucleation site selectivity | Nonselective | Nonselective | Selective | Nonselective | Highly selective |

**Table I. Categorization of Zn deposits**

[a] Anisotropically oriented: deposits grow three-dimensionally; bulk and individual deposits are polycrystalline.
Isotropically oriented: deposits grow two-dimensionally; individual deposits are single crystals.

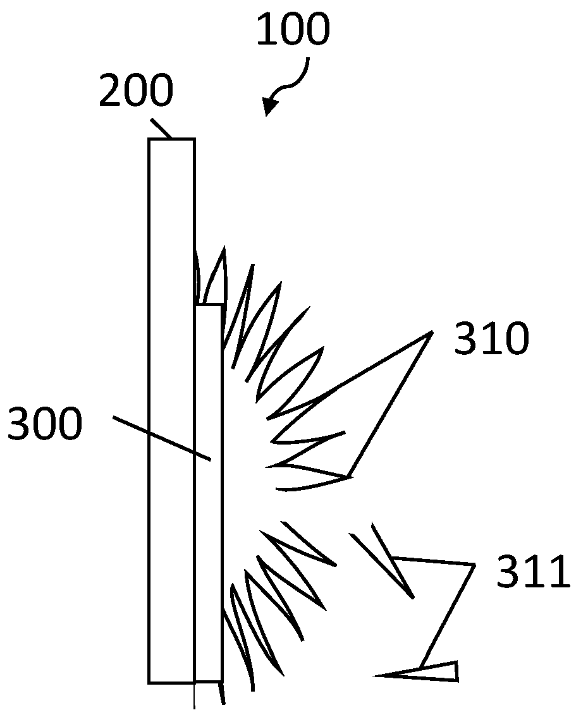


FIG. 7 state of the art

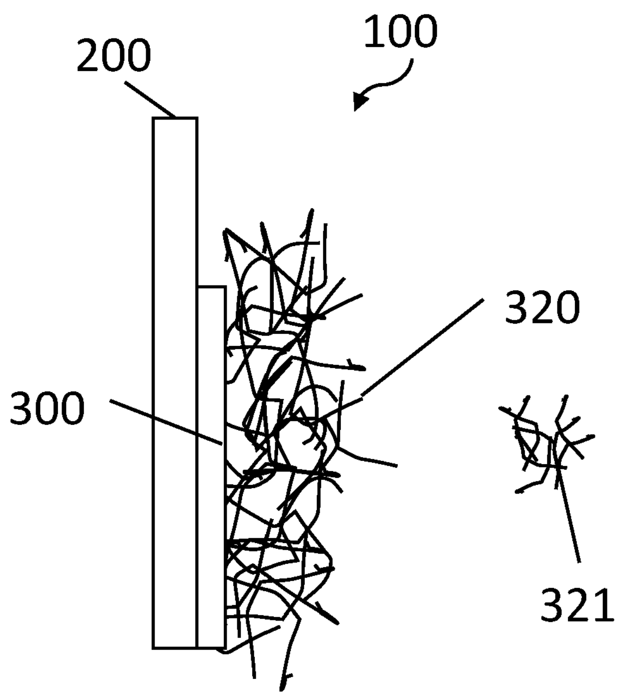


FIG. 8 state of the art

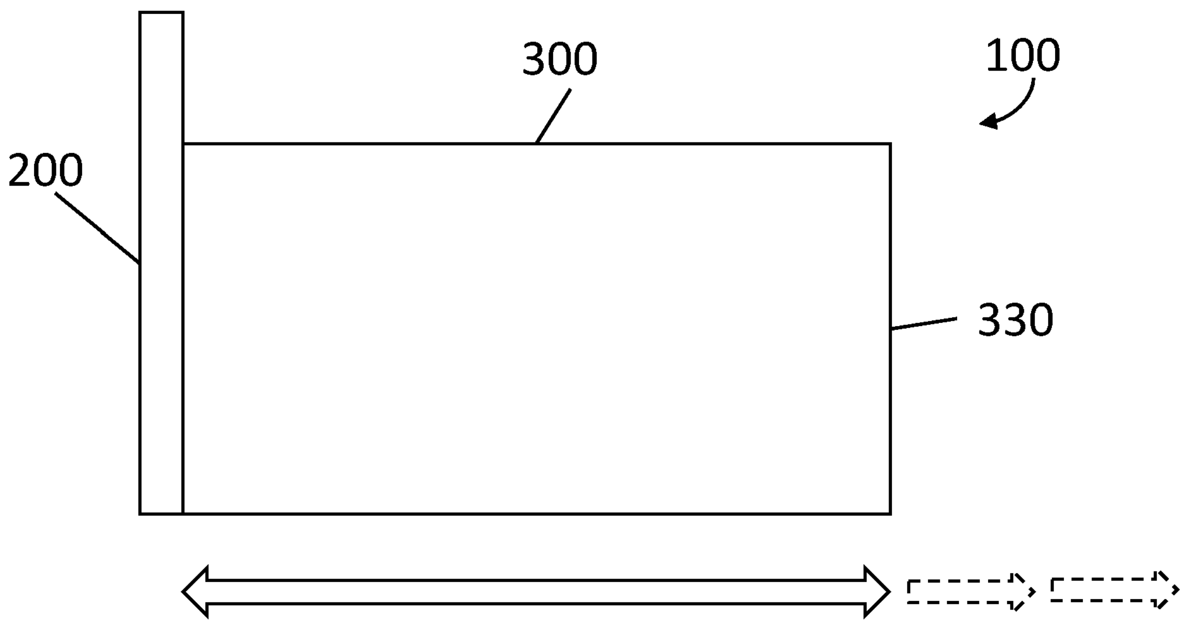


FIG. 9 present invention

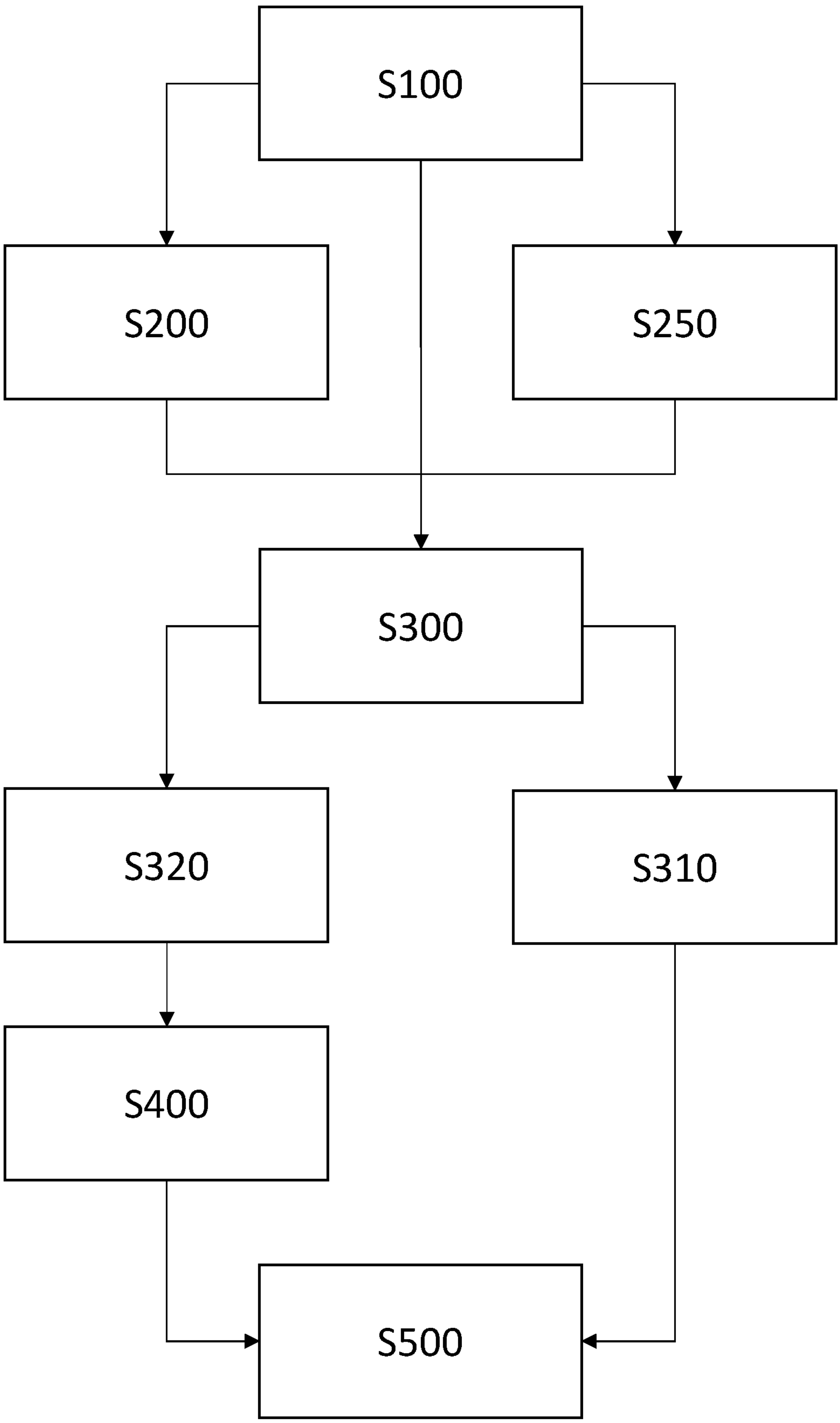


FIG. 10 present invention

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **R. Y. WANG et al.** Effects of Deposition Conditions on the Morphology of Zinc Deposits from Alkaline Zincate Solutions. *J. Electrochem. Soc*, 2006, 405
- **CHLADIL LADISLAV et al.** Pulse Deposition of Zinc in Alkaline Electrolytes for Ni¬¬-Zn Secondary Batteries. *ECT Transactions*, 17 November 2014, vol. 63, 217-223
- Rota-Hull Cell Study on Pulse Current Zinc Electrodeposition from Alkaline Electrolytes. **ZELGER CHRISTIAN et al.** Electrochimica Acta. Elsevier, 21 July 2016, vol. 213, 208-2016
- **R.Y. WANG et al.** *Journal of The Electrochemical Society*, 2006, vol. 153 (5), C357-C364